# EUROPÄISCHE PATENTSCHRIFT

(11) **EP 1 084 358 B1**
(45) Veröffentlichungstag und Bekanntmachung des Hinweises auf die Patenterteilung: **12.03.2003**
(21) Anmeldenummer: 99936415.1
(22) Anmeldetag: 05.06.1999
(51) Int. Cl.: F16K 1/44

(54) **DOPPELSICHERHEITSMAGNETVENTIL**
DUAL SAFETY MAGNETIC VALVE
DOUBLE VANNE DE SECURITE MAGNETIQUE

(30) Priorität: 12.06.1998 DE 19826076
(43) Veröffentlichungstag der Anmeldung: 21.03.2001
(73) Patentinhaber: Karl Dungs GmbH & Co., 73660 Urbach (DE)
(72) Erfinder: WÖRNER, Jürgen, D-73547 Weitmars (DE)
(74) Vertreter: Patentanwälte Rüger, Barthelt & Abel
(86) Internationale Anmeldenummer: DE9901648
(87) Internationale Veröffentlichungsnummer: WO99064770

(56) Entgegenhaltungen:
- WO-A-96/34219
- AT-B- 366 803
- DE-A- 2 510 788
- DE-A- 19 525 384
- PATENT ABSTRACTS OF JAPAN vol. 007, no. 250 (M-254), 8. November 1983 (1983-11-08) & JP 58 134284 A (ISHIKAWAJIMA HARIMA JUKOGYO KK), 10. August 1983 (1983-08-10)

## Beschreibung

Die Erfindung betrifft ein Doppelsicherheitsmagnetventil mit zwei in einem Gehäuse untergebrachten Ventilen, deren beide axial verschiebbaren Ventilteller koaxial zueinander angeordnet sind und jeweils durch eine axiale Bewegung in Öffnungsrichtung gegen den Federdruck einer ersten bzw. einer zweiten Schließfeder von ihrem jeweiligen Ventilsitz abheben, wobei der zweite, in Durchflußrichtung des Doppelsicherheitsmagnetventils innere Ventilteller als Stellelement einen Magnetanker aufweist und der erste, also äußere Ventilteller mit dem inneren Ventilteller in Öffnungsrichtung bewegungsgekoppelt ist.

Ein derartiges Doppelsicherheitsmagnetventil ist zum Beispiel durch die DE 195 25 384 A1 bekanntgeworden. Solche Doppelsicherheitsmagnetventile werden insbesondere als Sicherheitsmagnetventile an der Gas-Eingangsseite von Gaswärmeerzeugern eingesetzt.

Bei dem aus der DE 195 25 384 A1 bekannten Doppelsicherheitsmagnetventil sind die beiden Ventilteller axial übereinander in einem Gehäuse angeordnet und wirken jeweils mit einem eigenen Ventilsitz zusammen. Die Ventilteller sind jeweils Teil zweier voneinander unabhängiger Stellelemente, von denen das zweite im ersten axial verschiebbar geführt ist. Die beiden Stellelemente werden durch einen gemeinsamen Magnetantrieb jeweils gegen die Wirkung einer Schließfeder geöffnet, wobei bei Abschalten des Magneten die beiden Schließfedern den Schließhub der beiden Ventilteller voneinander vollständig unabhängig durchführen. Damit kann die Sicherheitsanforderung an Gassicherheitsventile erfüllt werden.

Obwohl mit dem bekannten Doppelsicherheitsmagnetventil bereits eine kompakte Bauweise und damit einerseits eine platzsparende, andererseits eine wesentlich preiswerter herzustellende Einheit ermöglicht worden ist, ist aufgrund der axial sowohl verschiebbaren als auch hintereinander angeordneten Ventilteller bzw. Steilelemente die axiale Bauhöhe noch relativ groß. Infolge der immer weiter voranschrsitenden Miniaturisierung ist allgemein eine noch weitere Reduzierung der Abmessungen des bekannten Doppelsicherheitsmagnetventils und insbesondere seiner axialen Bauhöhe angestrebt. Außerdem ist die Montage des bekannten Doppelsicherheitsmagnetventils sehr aufwendig, da der zweite Ventilteller durch die Ventilöffnung des ersten Ventiltellers eingefädelt werden muß.

Es ist daher die Aufgabe der Erfindung, ein Doppelsicherheitsmagnetventil der eingangs genannten Art in axialer Richtung (Öffnungsrichtung) noch kompakter zu gestalten.

Erfindungsgemäß wird diese Aufgabe auf ebenso überraschend einfache wie wirkungsvolle Art und Weise dadurch gelöst, daß der äußere Ventilteller den inneren Ventilteller umgibt und ihre beiden Ventilsitze zu einem gemeinsamen Ventilsitz zusammengefaßt sind, der die einzige Ventilöffnung umgibt, und daß die zweite (innere) Schließfeder des inneren Ventiltellers am äußeren Ventilteller oder an dessen Stellelement abgestützt ist.

Im Gegensatz zu dem aus der DE 195 25 384 A1 bekannten Doppelsicherheitsmagnetventil müssen nicht mehr zwei Ventilsitze mit hohem Zeit- und Arbeitsaufwand bearbeitet werden, sondern nur ein einziger Ventilsitz. Die Montage des Gerätes wird einfacher, da die Teile nicht mehr an zwei Sitze herangeführt werden müssen und ein kleineres Gerät besser zu handhaben ist. Da weniger Bearbeitung anfällt und die Abmessungen kleiner werden, ist das erfindungsgemäße Doppelsicherheitsmagnetventil auch kostengünstiger zu fertigen. Außer daß die axiale Bauhöhe erheblich verringert ist, werden wegen der erfindungsgemäßen Reduzierung der beiden Ventilfunktionen auf einen gemeinsamen Sitz auch die Durchflußwerte durch das erfindungsgemäße Doppelsicherheitsmagnetventil (Multifunktionalarmatur) mit denen eines Einzelsitzventils vergleichbar. Das erfindungsgemäße Doppelsicherheitsmagnetventil ist auf alle Baugrößen und Ventilarten erweiterbar, wodurch mit demselben Gehäuse eine Baureihe mit mehreren Varianten wie z.B. Einfachmagnetventil, Doppelmagnetventil oder Multifunktionalventil mit diversen Reglern, realisiert werden kann.

Die innere Schließfeder des inneren Ventiltellers ist am äußeren Ventilteller oder an dessen Stellelement abgestützt, z.B. an einer Umfangsschulter oder am Boden des Stellelements des äußeren Ventiltellers. Die innere Schließfeder kann z.B. zwischen den beiden Stellelementen, vorzugsweise in einem Ringspalt, oder in einer in Öffnungsrichtung offenen Öffnung des Magnetankers angeordnet sein.

Es versteht sich, daß die Erfindung nicht auf zwei Ventile bzw. Ventilteller beschränkt ist, sondern auch bei drei oder mehr koaxial angeordneten Ventiltellern angewendet werden kann, die jeweils ineinander geschachtelt sind.

In einer vorteilhaften Weiterbildung dieser Ausführungsform ist am gemeinsamen Ventilsitz eine gemeinsame flache Anlagefläche für beide Ventilteller vorgesehen. Diese Maßnahme hat den Vorteil, daß beide Ventilsitze durch Bearbeiten der gemeinsamen, insbesondere ebenen bzw. stufenlosen Anlagefläche in einem einzigen Arbeitsgang hergestellt werden können.

In einer alternativen Weiterbildung können am gemeinsamen Ventilsitz auch zwei axial versetzte Anlageflächen für jeweils einen Ventilteller vorgesehen sein. Zum Beispiel können die beiden Ventilsitze auf verschiedenen Ebenen am gemeinsamen Ventilsitz angelegt sein.

Für eine optimale Dichtungswirkung ist bei einer flachen Anlagefläche das mit dieser zusammenwirkende elastomere Dichtungsmittel des Ventiltellers spitz und bei einer spitzen Anlagefläche das mit dieser zusammenwirkende Dichtungsmittel flach ausgebildet. Es sind alle Varianten der Sitzanordnung möglich, z.B. beide spitz, beide flach, beide auf gleicher axialer Höhe, beide axial zueinander versetzt, jeweils auch umgekehrt, usw.

Besonders bevorzugt sind weiterhin solche Weiterbildungen des Doppelsicherheitsmagnetventils, bei denen am gemeinsamen Sitz auch noch eine Anlagefläche für ein in der Ventilöffnung axial bewegliches. Stellelement eines Durchfluß-Reglers vorgesehen ist. Diese Maßnahme hat den Vorteil, daß drei Funktionen (zwei Ventile und eine Durchflußregelung) an eineut Sitz zusammengeführt sind. Die Geschlossenstellung des Stellelements in der Ventilöffnung kann durch Anlage am gemeinsamen Ventilsitz exakt definiert werden. Das Stellelement kann z.B. eine Stange sein, deren in die Ventilöffnung ragendes freies tellerförmiges Ende in der Geschlossenstellung ringsum an dem gemeinsamen Ventilsitz anliegt.

In einer dazu alternativen Weiterbildung kann am gemeinsamen Ventilsitz eine Anlage- oder Reglerfläche für ein stromaufwärts vor den beiden Ventiltellern bzw. Ventilen vorgesehenes Stellelement vorgesehen sein. Insbesondere wenn das Stellelement die beiden Ventilteller topfförmig übergreift, sind diese durch das Stellelement zusätzlich abgeschirmt.

Um das erfindungsgemäße Doppelsicherheitsmagnetventil auf seine Dichtigkeit überprüfen zu können, ist am gemeinsamen Ventilsitz eine Dichtigkeitsprüföffnung vorgesehen, die sich in den Raum zwischen den beiden Ventiltellern öffnet.

Auf eine separate Führung des inneren Ventiltellers bzw. seines Stellelements kann verzichtet werden, wenn der inneren Ventilteller oder der Magnetanker innerhalb des äußeren Ventiltellers oder dessen Stellelements oder innerhalb eines Führungselements des äußeren Ventiltellers axial verschiebbar geführt ist.

Von besonderem Vorteil ist es, wenn der äußere Ventilteller mit dem inneren Ventilteller in Öffnungsrichtung bewegungsgekoppelt ist. Dadurch wird mit dem inneren Ventilteller gleichzeitig auch der äußere Ventilteller vom gemeinsamen Ventilsitz abgehoben. In Schließrichtung sind beide Ventilteller hingegen nicht bewegungsgekoppelt, damit sie vollständig voneinander unabhängig ihren Schließhub durchführen können.

In einer Weiterbildung dieser Ausführungsform kann der äußere Ventilteller oder dessen Stellelement den Magnetanker in Öffnungsrichtung hintergreifen.

Um das Doppelsicherheitsmagnetventil mit besonders geringen Herstellungskosten fertigen zu können, ist das Gehäuse der beiden Ventile vorzugsweise als Druckgußteil oder durch ein Strangpraßprofil gebildet. Auch bei einem solchen Strangpreßprofil ist es möglich, die für Gassicherheitsventile vorgeschriebene Dichtheitskontrolle seitlich anzubringen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gszsigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigt:
- Fig. 1.: eine erste Ausführungsform des erfindungsgemäßen Doppelsicherheitsmagnetventils in einem Längs-schnitt;
- Fig. 2: eine vergrößerte Ansicht des Doppelsicherheitsmagnetventils der Fig. 1 im Bereich seiner Ventilöffnung entsprechend dem Ausschnitt II; und
- Fig. 3: in einer der Fig. 2 entsprechenden vergrößerten Ansicht eine zweite Ausführungsform des erfindungsgemäßen Doppelsicherheitsmagnetventils, wobei die innere Schließfeder am Boden des äußeren Stellelements abgestützt ist.

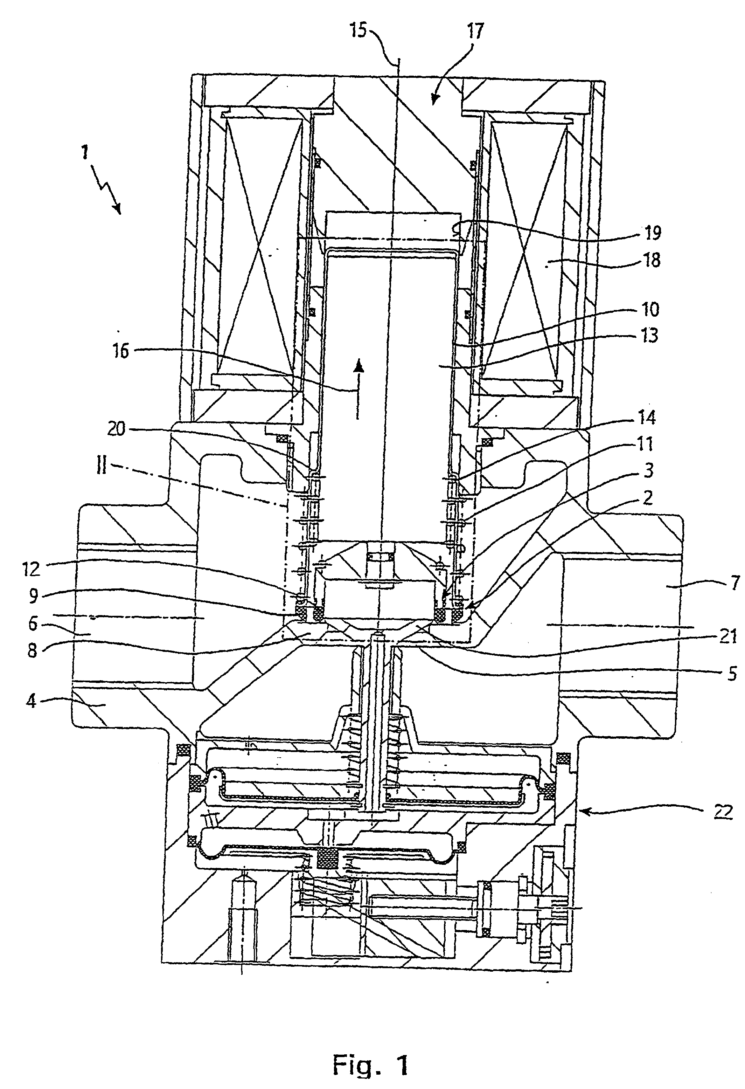

In Fig. 1 ist mit **1** ein Doppelsicherheitsmagnetventil bezeichnet, dessen zwei in Serie geschalteten Ventile **2** und **3** in einem gemeinsamen Gehäuse **4** untergebracht sind. Dieses Gehäuse 4 ist durch eine Ventilöffnung **5** in einen Gaseintrittsraum **6** und einen Gasaustrittsraum **7** aufgegliedert, wobei die Ventilöffnung 5 von einem Ventilsitz **8** umgeben ist.

Das eingangsseitige erste (äußere) Ventil 2 besteht aus einem ringförmigen ersten (äußeren) Ventilteller **9**, einem mit dem Ventilteller 9 verbundenen Stellelement (Hohlanker oder Hülse) **10** und einer ersten (äußeren) Schließfeder **11**. Das ausgangsseitige zweite (innere) Ventil 3 besteht aus einem ringförmigen ersten (inneren) Ventilteller **12**, einem mit diesem Ventilteller 12 verbundenen Magnetanker **13** und einer zweiten (inneren) Schließfeder **14**.

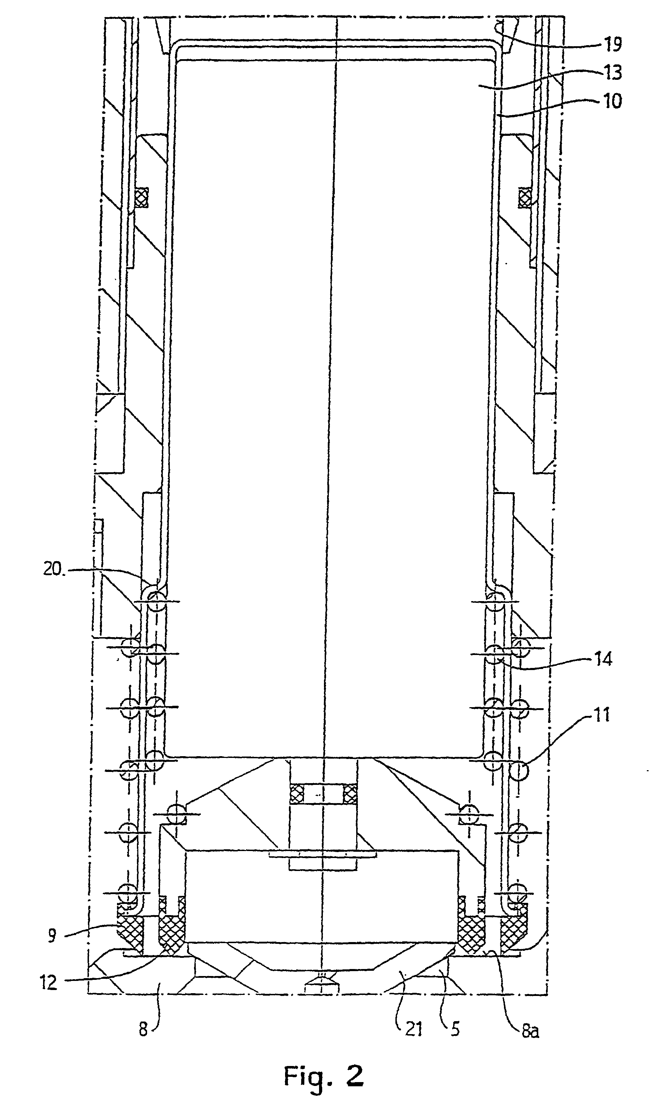

Die beiden Ventile 2, 3 bzw. ihre Ventilteller 9, 12 sind bezüglich einer gemeinsamen Achse **15** koaxial zueinander angeordnet, wobei der äußere Ventilteller 9 den inneren Ventilteller 12 ringförmig umgibt. Der Ventilsitz 8 dient mit seiner Anlagefläche **8a** (Fig. 2) als gemeinsamer Ventilsitz für beide Ventilteller 9, 12, die jeweils durch eine axiale Bewegung in Öffnungsrichtung **16** vom gemeinsamen Ventilsitz 8 abheben. Zum Öffnen der beiden Ventile 2, 3 dient ein gemeinsamer Magnetastrieb **17** mit einer Magnetspule **18** und einer Führungsöffnung **19**, in welcher das Stellelement 10 axial verschiebbar geführt ist. Der Magnetanker 13 ist seinerseits im Stellelement 10 axial verschiebbar geführt, wobei das topfförmig ausgebildete Stellelement 10 den Magnetanker 13 in Öffnungsrichtung 16 hintergreift und damit mit dem Magnetanker 13 in Öffnungsrichtung 16 bewegungsgekoppelt ist.

Die äußere Schließfeder 11 ist am Gehäuse 4 abstützt, während die innere Schließfeder 14 innen im Stellelement 10 an einer Umfangsschulter **20** abgestützt ist. Im dargestellten geschlossenen Zustand des Doppelsicherheitsmagnetventils 1 bringt die äußere Schließfeder 11 daher die Kraft zum Schließen beider Ventilteller 9, 12 bzw. beider Ventile 2, 3 auf. Beide Ventile deshalb, da sich die innere Schließfeder 14 gegen die äußere Schließfeder 11 abstützt und diese dadurch entlastet wird.

Bei Erregung der Magnetspule 18 entstehen magnetische Kraftlinien, die den Magnetanker 13 zusammen mit dem inneren Ventilteller 12 in Öffnungsrichtung 16 anziehen. Durch die Be-wegungskopplung wird mit dem inneren Ventilteller 12 gleichzeitig auch der äußere Ventilteller 9 vom gemeinsamen Ventilsitz 8 abgehoben. Nach Abschalten der Magnetspule 18 bewirken die Schließfedern 11, 14 für jedes Ventil 2, 3 ein voneinander unabhängiges Schließen. Die Kraft der inneren Schließfeder 14 schließt den inneren Ventilteller 12 bzw. das innere Ventil 3.

Für den Fall, daß das äußere Ventil 2 nicht schließt, z.B. weil das Stellelement 10 in der Führungsöffnung 19 verklemmt ist, ist die innere Schließfeder 14 so ausgelegt, daß trotzdem noch genug Kraft vorhanden ist, auch in diesem Fall den inneren Ventilteller 12 bzw. das innere Ventil 3 zu schließen. Dies bedeutet, daß das innere Ventil 3 schließt, wenn das äußere Ventil 2 schließt (Hub des inneren Ventiltellers 12 relativ zum äußeren Ventilteller 9: 1 mm) und wenn das äußere Ventil 2 aufgrund einer Febifunktion nicht schließen sollte (Hub des inneren Ventiltellers 12 relativ zum äußeren Ventilteller 9: Nennhub + 1 mm). Zum Öffnen der beiden Ventile 2, 3 ist gegenüber bekannten Doppelsicherheitsmagnetventilen mit axial hintereinander angeordneten Ventilen trotz der stärkeren äußeren Schließfeder 11 kein stärker Magnet erforderlich, da die äußere Schließfeder 11, wie oben beschrieben, von der inneren Schließfeder 14 entlastet wird.

Um den Durchfluß durch die Ventilöffnung 5 zu regeln, ist ein im Querschnitt Y-förmiges Stellelement **21** vorgesehen, welches die Ventilöffnung 5 durchgreift und axial verschiebbar ist. Mittels eines an sich bekannten Durchfluß-Reglers **22** wird das Stellelement 21 entsprechend einem im Gasaustrittraum 7 gewünschten Ausgangsdruck verstellt. In seiner in Fig. 2 gezeigten geschlossenen Stellung liegt das Stellelement 21 mit seinem freien tellerförmigen Ende ebenfalls an der flachen Anlagefläche 8a des gemeinsamen Ventilsitzes 8 an, wobei der Durchmesser des tellerförmigen Endes größer als der Durchmesser der Ventilöffnung 5 ist.

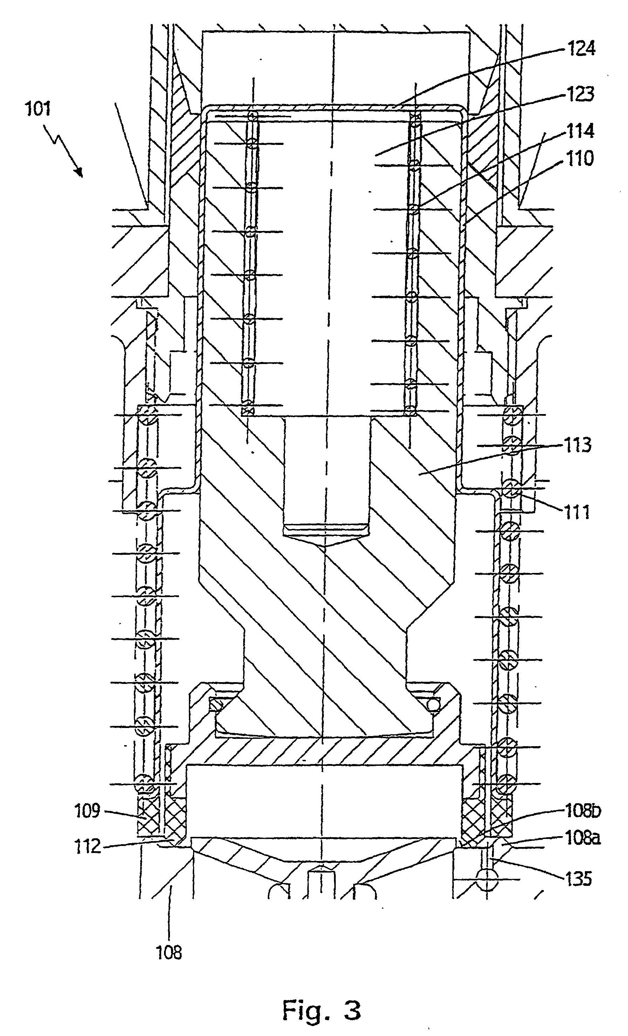

Gegenüber dieser ersten Ausführungsform unterscheidet sich das in Fig. 3 gezeigte Doppelsicherheitsmagnetventil **101** dadurch, daß die innere Schließfeder **114** innerhalb einer Öffnung (Sackbohrung) **123** im Magnetanker **113** untergebracht ist und sich einenends am Magmetanker 113 und anderenends am Boden **124** des topfförmigen Stellelements **110** abstützt. Durch diese Anordnung ergeben sich viele Möglichkeiten für die Federauslegung. Der Vorteil der abhängig abgestützten Schließfedern **111** und 114 besteht darin, daß im Fall eines Verklemmens des Magnetankers 113 im Stellelement 110 die starke äußere Schließfeder 111, die bisher die Schließkraft für die beiden Ventilteller **109**, **112** gespeichert hat, den verbleibenden intakten äußeren Ventilteller 109 schließt.

Bei dieser Ausführungsform weist der gemeinsame Ventilsitz **108** keine gemeinsame flache Anlagefläche für beide Ventilteller 109 und 112 auf, sondern die beiden Anlageflächen **108a** und **108b** sind axial versetzt zueinander angeordnet. Die äußere Anlagefläche 108a ist spitz und das mit dieser Anlagefläche 108a zusammenwirkende elastomere Dichtungsmittel des äußeren Ventiltellers 109 flach ausgebildet. Hingegen ist die innere Anlagefläche 108b, die gleichzeitig als Anlagefläche für das Stellelement 21 dient, flach und das mit dieser Anlagefläche 108b zusammenwirkende elastomere Dichtungsmittel des inneren Ventiltellers 112 spitz ausgebildet. Weiterhin ist am gemeinsamen Ventilsitz 108 eine Dichtigkeitsprüföffnung **135** vorgesehen, die in den Ringraum zwischen beide Ventilteller 109, 112 führt, so daß eine Dichtheitsprüfung des Doppelsitzventils 101 möglich ist.

## Patentansprüche

1. Doppelsicherheitsmagnetventil (1; 101) mit zwei in einem Gehäuse (4) untergebrachten Ventilen (2, 3), deren beide axial verschiebbaren Ventilteller (9, 12; 109, 112) koaxial zueinander angeordnet sind und jeweils durch eine axiale Bewegung in Öffnungsrichtung (16) gegen den Federdruck einer ersten bzw. einer zweiten Schließfeder (11, 14; 111, 114) von ihrem jeweiligen Ventilsitz abheben, wobei der zweite, in Durchflußrichtung des Doppelsicherheitsmagnetventils (1; 101) innere Ventilteller (12; 112) als Stellelement einen Magnetanker (13; 113) aufweist und der erste, also äußere Ventilteller (9; 109) mit dem inneren Ventilteller (12; 112) in Öffnungsrichtung (16) bewegungsgekoppelt ist,
**dadurch gekennzeichnet,**
**daß** der äußere Ventilteller (9; 109) den inneren Ventilteller (12; 112) umgibt und ihre beiden Ventilsitze zu einem gemeinsamen Ventilsitz (8; 108) zusammengefaßt sind, der die einzige Ventilöffnung (5) umgibt, und daß die zweite (innere) Schließfeder (14; 114) des inneren Ventiltellers (12; 112) am äußeren Ventilteller (9; 109) oder an dessen Stellelement (10; 110) abgestützt ist.

2. Doppelsicherheitsmagnetventil nach Anspruch 1, **dadurch gekennzeichnet, daß** am gemeinsamen Ventilsitz (8) eine gemeinsame flache Anlagefläche (8a) für beide Ventilteller (9, 12) vorgesehen ist.

3. Doppelsicherheitsmagnetventil nach Anspruch 1, **dadurch gekennzeichnet, daß** am gemeinsamen Ventilsitz (108) zwei axial versetzte Anlageflächen (108a, 108b) für jeweils einen Ventilteller (109, 112) vorgesehen sind.

4. Doppelsicherheitsmagnetventil nach einem der vorhergehenden Ansprüche, **dadurch gekennzeichnet, daß** bei einer flachen Anlageflächs (8a; 108b) das mit dieser zusammenwirkende elastomere Dichtungsmittel des Ventiltellers (9; 12; 112) spitz und bei einer spitzen Anlagefläche (108a) das mit dieser zusammenwirkende Dichtungsmittel des Ventiltellers (109) flach ausgebildet ist.

5. Doppelsicherheitsmagnetventil nach einem der vorhergehenden Ansprüche, **dadurch gekennzeichnet, daß** am gemeinsamen Sitz (8; 108) auch eine Anlagefläche (8a; 108b) für ein in der Ventilöffnung (5) axial bewegliches Stellelement (21) eines Durchfluß-Reglers (22) vorgesehen ist.

6. Doppelsicherheitsmagnetventil nach einem der vorhergeheaden Ansprüche, **dadurch gekennzeichnet, daß** am gemeinsamen Ventilsitz auch eine Anlage- oder Reglerfläche für ein stromaufwärts vor den beiden Ventiltellern vorgesehenes Stellelement vorgesehen ist.

7. Doppelsicherheitsmagnetventil nach einem der vorhergehanden Ansprüche, **dadurch gekennzeichnet, daß** am gemeinsamen Ventilsitz (108) eine Dichtigkeitsprüföffnung (135) vorgesehen ist, die sich in den Raum zwischen den beiden Ventiltellern (109, 112) öffnet.

8. Doppelsicherheitsmagnetventil nach einem der vorhergehenden Ansprüche, **dadurch gekennzeichnet, daß** der innere Ventilteller (12; 112) oder der Magnetanker (13; 113) innerhalb des äußeren Ventiltellers oder dessen Stellelement (10; 110) oder innerhalb eines Führungselements des äußeren Ventiltellers (9; 109) axial verschiebbar geführt ist.

9. Doppelsicherheitsmagnetventil nach einem der vorhergehenden Ansprüche, **dadurch gekennzeichnet, daß** der äußere Ventilteller (9; 109) oder dessen Stellelement (10; 110) den Magnetanker (13; 113) in Öffnungsrichtung (16) hintergreift.

10. Doppelsicherheitsmagnetventil nach einem der vorhergehenden Ansprüche, **dadurch gekennzeichnet, daß** die innere Schließfeder (14) an einer Umfangsschulter (20) des Stellelements (10) des äußeren Ventiltellers (9) abgestützt ist.

11. Doppelsicherheitsmagnetventil nach einem der Ansprüche 1 bis 9, **dadurch gekennzeichnet, daß** die innere Schließfeder (114) an einem Boden (124) des Stellelements (110) des äußeren Ventiltellers (109) abgestützt ist.

12. Doppelsicherheitsmagnetventil nach Anspruch 11, **dadurch gekennzeichnet, daß** die innere Schließfeder (114) in einer in Öffnungsrichtung (16) offenen Öffnung (123) des Magnetankers (113) angeordnet ist.

13. Doppelsicherheitsmagnetventil nach einem der vorhergehenden Ansprüche, **dadurch gekennzeichnet, daß** das Gehäuse (4) der beiden Ventile (2, 3) durch ein Strangpreßprofil oder als Druckgußteil gebildet ist.

## Claims

1. A dual magnetic safety valve (1; 101) with, accommodated in a housing (4), two valves (2, 3) of which both axially displaceable valve discs (9, 12; 109, 112) are disposed coaxially in relation to each other, each being lifted off its respective valve seat by an axial movement in the opening direction (16) against the spring pressure of a first and second respective closing spring (11, 14; 111, 114), whereby the second and, in the direct on of flow of the dual magnetic safety valve (1; 101), the inner valve disc (12; 112) comprises a magnetic armature (13, 113) as its positioning element, while the first, in other words the outer valve disc (9; 109) is motionally coupled with the inner valve disc (12; 112) in the opening direction (16), **characterised in that** the outer valve disc (9; 109) surrounds the inner valve disc (12; 112), their two valve seats being combined into a common valve seat (108) which surrounds the single valve orifice (5) and **in that** the second (inner) closing spring (14; 114) of the inner valve disc (12; 112) is biased on the outer valve disc (9; 109) or on its positioning element (10; 110).

2. A dual magnetic safety valve according to Claim 1, **characterised in that** there is on the common valve seat (8) a common flat bearing surface (8a) for both valve discs (9, 12).

3. A dual magnetic safety valve according to Claim 1, **characterised in that** provided on the common valve seat (108) are two axially offset bearing surfaces (108a, 108b) for in each case one valve disc (109, 12).

4. A dual magnetic safety valve according to one of the preceding claims, **characterised in that** in the case of one flat bearing surface (8a; 108b), the elastomeric sealing means of the valve disc (9, 12; 112) is pointed while for a pointed bearing surface (108a), the sealing means of the valve disc (109) co-operating therewith is of flat construction.

5. A dual magnetic safety valve according to one of the preceding claims, **characterised in that** on the common seat (8; 108) there is also a bearing surface (8a; 108b) for a positioning element (21) of a through flow regulator (22) which is adapted for axial movement in the valve orifice (5),

6. A dual magnetic safety valve according to one of the preceding claims, **characterised in that** on the common valve seat there is also a bearing or regulating surface for a positioning element disposed upstream of the two valve discs.

7. A dual magnetic safety valve according to one of the preceding claims, **characterised in that** on the common valve seat (108) there is a seal testing orifice (135) which opens out into the space between the two valve discs (109, 112).

8. A dual magnetic safety valve according to one of the preceding claims, **characterised in that** the inner valve disc (12; 112) or the magnetic armature (13; 113) is guided for axial displacement within the outer valve disc or its positioning element (10; 110) or within a guide element of the outer valve disc (9; 109).

9. A dual magnetic safety valve according to one of the preceding claims, **characterised in that** the outer valve disc (9; 109) or its positioning element (10; 110) engages behind the magnetic armature (13; 113) in the opening direction (16).

10. A dual magnetic safety valve according to one of the preceding claims, **characterised in that** the inner closing spring (14) is biased on a peripheral shoulder (20) of the positioning element (10) of the outer valve disc (9).

11. A dual magnetic safety valve according to one of Claims 1 to 9, **characterised in that** the inner closing spring (114) is biased on a base (124) of the positioning element (110) of the outer valve disc (109).

12. A dual magnetic safety valve according to claim 11, **characterised in that** the inner closing spring (114) is disposed in an opening (123) in the magnetic armature (113) and which is open in the opening direction (16).

13. A dual magnetic safety valve according to one of the preceding claims, **characterised in that** the housing (4) of the two valves (2, 3) is formed by an extruded section or as a pressure diecast part.

## Revendications

1. Double vanne de sécurité magnétique (1 ; 101) comportant deux vannes (2, 3) logées dans un boîtier (4) dont les deux têtes de vanne (9, 12 ; 109, 112) mobiles axialement sont agencées coaxialement l'une à l'autre et se soulèvent de leur siège de vanne respectif par un mouvement axial en direction d'ouverture (16) à l'encontre de la force respectivement d'un premier et d'un deuxième ressort d'obturation (11, 14 ; 111, 114), dans laquelle la deuxième tête de vanne (12 ; 112) intérieure en direction d'écoulement de la double vanne de sécurité magnétique (1 ; 101) comprend un induit magnétique (13 ; 113) à titre d'élément de positionnement, et la première tête de vanne (9 ; 109), donc la tête extérieure, est couplée en mouvement à la tête de vanne intérieure (12 ; 112) en direction d'ouverture (16),
**caractérisée en ce que** la tête de vanne extérieure (9 ; 109) entoure la tête de vanne intérieure (12 ; 112) et leurs deux sièges de vanne sont réunis en un siège de vanne commun (8 ; 108) qui entoure l'ouverture de vanne unique (5), et **en ce que** le deuxième ressort d'obturation (intérieur) (14 ; 114) de la tête de vanne intérieure (12 ; 112) est appuyé contre la tête de vanne extérieure (9 ; 109) ou contre son élément de positionnement (10 ; 110).

2. Double vanne de sécurité magnétique selon la revendication 1, **caractérisée en ce qu'**il est prévu sur le siège de vanne commun (8) une surface d'appui plane commune (8a) pour les deux têtes de vanne (9, 12).

3. Double vanne de sécurité magnétique selon la revendication 1, **caractérisée en ce qu'**il est prévu sur le siège de vanne commun (8) deux surfaces d'appui (108a, 108b) axialement décalées pour une tête de vanne respective (109, 112).

4. Double vanne de sécurité magnétique selon l'une des revendications précédentes, **caractérisée en ce que** pour une surface d'appui plane (8a ; 108b) l'organe d'étanchéité élastomère coopérant avec celle-ci de la tête de vanne (9 ; 12 ; 112) est réalisé effilé, et pour une surface d'appui effilée (108a) l'organe d'étanchéité coopérant avec celle-ci de la tête de vanne (109) est réalisé à plat.

5. Double vanne de sécurité magnétique selon l'une des revendications précédentes, **caractérisée en ce qu'**il est prévu sur le siège commun (8 ; 108) également une surface d'appui (8a ; 108b) pour un élément de positionnement (21) d'un régulateur d'écoulement (22), élément qui est axialement mobile dans l'ouverture de vanne (5).

6. Double vanne de sécurité magnétique selon l'une des revendications précédentes, **caractérisée en ce qu'**il est prévu sur le siège de vanne commun également une surface d'appui ou de régulation pour un élément de positionnement prévu en amont des deux têtes de vanne.

7. Double vanne de sécurité magnétique selon l'une des revendications précédentes, **caractérisée en ce qu'**il est prévu sur le siège de vanne commun (108) une ouverture de contrôle d'étanchéité (135) qui s'ouvre dans l'espace entre les deux têtes de vanne (109, 112).

8. Double vanne de sécurité magnétique selon l'une des revendications précédentes, **caractérisée en ce que** la tête de vanne intérieure (12 ; 112) ou l'induit magnétique (13 ; 113) est guidé(e) axialement mobile à l'intérieur de la tête de vanne extérieure ou de son élément de positionnement (10 ; 110) ou à l'intérieur d'un élément de guidage de la tête de vanne extérieure (9 ; 109).

9. Double vanne de sécurité magnétique selon l'une des revendications précédentes, **caractérisée en ce que** la tête de vanne extérieure (9 ; 109) ou son élément de positionnement (10 ; 110) engage par l'arrière l'induit magnétique (13 ; 113) en direction d'ouverture (16).

10. Double vanne de sécurité magnétique selon l'une des revendications précédentes, **caractérisée en ce que** le ressort d'obturation intérieur (14) est appuyé contre un épaulement périphérique (20) de l'élément de positionnement (10) de la tête de vanne extérieure (9).

11. Double vanne de sécurité magnétique selon l'une des revendications 1 à 9, **caractérisée en ce que** le ressort d'obturation intérieur (114) est appuyé contre un fond (124) de l'élément de positionnement (110) de la tête de vanne extérieure (109).

12. Double vanne de sécurité magnétique selon la revendication 11, **caractérisée en ce que** le ressort d'obturation intérieur (114) est agencé dans une ouverture (123) de l'induit magnétique (113) ouverte en direction d'ouverture (16).

13. Double vanne de sécurité magnétique selon l'une des revendications précédentes, **caractérisée en ce que** le boîtier (4) des deux vannes (2, 3) est formé par un profilé extrudé ou par une pièce coulée sous pression.
